(19) **Europäisches Patentamt**
**European Patent Office**
**Office européen des brevets**

(11) **EP 1 430 287 B1**

(12) **FASCICULE DE BREVET EUROPEEN**

(45) Date de publication et mention
de la délivrance du brevet:
**14.04.2010 Bulletin 2010/15**

(51) Int Cl.:
***G01N 21/31*** *(2006.01)*

(21) Numéro de dépôt: **02800150.1**

(86) Numéro de dépôt international:
**PCT/FR2002/002912**

(22) Date de dépôt: **20.08.2002**

(87) Numéro de publication internationale:
**WO 2003/029791 (10.04.2003 Gazette 2003/15)**

(54) **DISPOSITIF DE MESURE DES CARACTERISTIQUES D'ABSORPTION LUMINEUSE D'UN ECHANTILLON DE TISSU BIOLOGIQUE**

VERFAHREN ZUR MESSUNG VON LICHTABSORPTIONSEIGENSCHAFTEN EINER BIOLOGISCHEN GEWEBSPROBE

DEVICE FOR MEASURING LIGHT ABSORPTION CHARACTERISTICS OF A BIOLOGICAL TISSUE SAMPLE

(84) Etats contractants désignés:
**AT BE BG CH CY CZ DE DK EE ES FI FR GB GR IE IT LI LU MC NL PT SE SK TR**

(30) Priorité: **28.09.2001 FR 0112551**

(43) Date de publication de la demande:
**23.06.2004 Bulletin 2004/26**

(73) Titulaire: **CENTRE NATIONAL DE LA RECHERCHE SCIENTIFIQUE (CNRS)**
**75016 Paris (FR)**

(72) Inventeurs:
• **GOULAS, Yves**
**F-92350 Le Plessis-Robinson (FR)**

• **CEROVIC, Zoran**
**F-75015 Paris (FR)**
• **MOYA, Ismaël**
**F-91190 GIF sur Yvette (FR)**

(74) Mandataire: **Jacobson, Claude et al**
**Cabinet Lavoix**
**2, place d'Estienne d'Orves**
**75441 Paris Cedex 09 (FR)**

(56) Documents cités:
**EP-A- 0 502 717     WO-A-00/75642**
**DE-A- 3 518 527     US-A- 5 096 294**
**US-A- 5 800 348**

**Description**

L'invention concerne un dispositif de mesure des caractéristiques d'absorption lumineuse d'un échantillon de tissu biologique.

En particulier, l'invention est destinée à analyser le contenu de feuilles de végétaux, à savoir la concentration en certains composés chimiques.

Durant leur cycle de vie, les plantes doivent s'adapter à des variations quelquefois importantes de leurs conditions d'environnement, comme par exemple la lumière ou la disponibilité en eau et en ressources minérales. Ces adaptations s'accompagnent souvent de variations dans le contenu des feuilles en certains métabolites, en particulier ceux du métabolisme dit secondaire comme les polyphénols. Cette classe de métabolites désigne les composés qui possèdent au moins une fonction phénol ou qui sont directement dérivés de composés phénoliques, par estérification par exemple. Une autre dénomination usuelle, que nous emploieront par la suite pour ces composés et ceux des familles voisines, est l'appellation "phénylpropanoïdes", en raison dé leur origine biosynthétique.

Il a été établi que les phénylpropanoïdes varient d'une espèce à l'autre, qu'ils s'accumulent principalement dans les vacuoles des cellules épidermiques et qu'ils peuvent montrer des variations importantes de concentration en fonction des conditions d'environnement.

Par exemple, M.M. Cadwell et coll. ont montré dans un article intitulé « Internal filters : prospects for UV-acclimation in higher plants » (Physiol Plant. (1983) 58, pp 445-450) que les phénylpropanoïdes s'accumulent suite à l'exposition à la lumière, probablement dans un but de protection des feuilles à la radiation ultraviolette.

Une autre raison également avancée pour les variations du contenu des feuilles en phénylpropanoïdes fait intervenir l'ajustement des voies métaboliques en fonction des proportions relatives des ressources disponibles en carbone et en azote. Quant l'azote est abondant par rapport à la quantité de carbone fixé, la plante investit dans la production de biomasse consommatrice d'azote, et favorisant sa croissance. Il en résulte un faible taux de phénylpropanoïdes. Quand l'azote se raréfie par rapport au carbone, la production photosynthétique est alors détournée vers la synthèse de composés pauvres en azote que sont les phénylpropanoïdes. On peut consulter à ce sujet dans la revue Oikos (1983, vol. 40, pp.357-368), l'article de J.P. Bryant et coll. "Carbon/nutrient balance of boreal plants in relation to vertebrate herbivory" ; dans la revue "Journal of Chemical Ecology" (1989, vol. 15, pp 1117-1131), l'article de P. Price et coll. "Carbon-nutrient balance hypothesis in within-species phytochemical variation of Salix lasiolepis" ; dans la revue "Quart. Rev. Biol." (1992, vol. 67, pp. 283-335), l'article de D.A. Herms and W.J. Mattson "The dilemma of plants: To grow or to defend".

D'autres rôles des phénylpropanoïdes ont également été montrés, comme la sélection de la nourriture par les herbivores ou la protection contre les agents pathogènes (Plant Cell, 1995, vol. 7, pp. 1085-1097, R.A. Dixon and N.L. Paiva, Stress-induced phenylpropanoid metabolism).

Ainsi, le suivi *in situ* du contenu des feuilles ou de l'épiderme des feuilles en phénylpropanoïdes apporterait des informations susceptibles d'être utilisées dans différents champs d'application. En écophysiologie, il permettrait de suivre les effets de l'augmentation des radiations UV due au trou d'ozone et ceux de l'augmentation de la teneur en $CO_2$ atmosphérique suite à l'utilisation des hydrocarbures fossiles, et d'étudier les interactions entre plantes et herbivores. En biologie végétale, il permettrait une évaluation de la productivité du métabolisme secondaire et un suivi du développement végétal. En sylviculture, on disposerait d'un outil de description de la structure végétale, qui pourrait quantifier la répartition de la lumière au sein du couvert, ou encore estimer la répartition des ressources nutritives. Enfin en agriculture, on disposerait d'un outil de diagnostic rapide, non-invasif pour le contrôle des apports nutritifs ou de l'attaque par des agents pathogènes.

Un procédé connu d'analyse du contenu en phénylpropanoïdes consiste à extraire tout d'abord ces pigments foliaires par broyage et immersion dans un solvant, comme le méthanol par exemple. Ensuite on détermine le contenu en phénylpropanoïdes de l'extrait par une mesure de la transmittance dans l'ultraviolet où les phénylpropanoïdes possèdent une ou plusieurs bandes d'absorption. (Voir à ce sujet "Analysis of Phenolic Plant Metabolites. Methods in Ecology" de P.G. Waterman et S. Mole, eds. J.H. Lawton et G.E. Likens, 1994, Oxford : Blackwell Scientific Publications. 238). Mais ce dernier procédé est destructif et n'est pas applicable sur le terrain à cause de l'équipement de laboratoire qu'il demande. Une mesure *in situ* par absorption ultraviolet n'est pas non plus applicable à cause de la forte absorption des pigments photosynthétiques (chlorophylle a et b) qui interfère avec l'absorption due au phénylpropanoïdes que l'on veut mesurer.

Pour être utilisable sur le terrain dans le cadre de ces différentes applications, la mesure du contenu en phénylpropanoïde doit être rapide, simple et doit pouvoir s'effectuer *in situ* de manière non-destructive afin de permettre un suivi régulier.

Aussi, une méthode avantageuse d'évaluation *in situ* consiste à déterminer la transmittance de l'épiderme des feuilles, à partir des mesures de la fluorescence rouge provenant de la chlorophylle excitée par un rayonnement ultraviolet d'analyse d'une part, et excitée par un rayonnement visible de référence d'autre part.

Ainsi, à la longueur d'onde d'analyse λ1, la fluorescence mesurée F1 vaut :

$$F1 = k1 \ T1 \ I1$$

où T1 est la transmittance de l'épiderme à la longueur d'onde $\lambda 1$, I1 l'intensité du rayonnement de mesure incident à la même longueur d'onde, et k1 un facteur de proportionnalité.

A la longueur d'onde de référence $\lambda 0$, la fluorescence mesurée F0 est déterminée par une équation analogue :

$$F0 = k0 \ T0 \ I0$$

où T0 est la transmittance de l'épiderme à la longueur d'onde $\lambda 0$, I0 l'intensité du rayonnement de mesure incident à la même longueur d'onde, et k0 un facteur de proportionnalité.

L'absorbance A due aux phénylpropanoïdes présents dans l'épiderme est définie par la relation :

$$A = -\text{Log}[T1/T0] = -\text{Log}[F1/F0 \ x \ (I0 \ k0)/(I1 \ k1)] \qquad (1)$$

et si I1, I0, k1 et k0 sont maintenus constants d'une mesure à l'autre :

A = -Log[F1/F0] + C, où C est une constante.

Comme l'absorbance et le contenu en phénylpropanoïdes varient de manière parallèle, on peut donc estimer le contenu en phénylpropanoïdes à partir des mesures de F1 et F0, et d'une calibration qui détermine la valeur de la constante.

Or, C est en réalité dépendante non seulement de l'instrument de mesure, mais également des variations du rendement de fluorescence de la chlorophylle qui peuvent intervenir entre la mesure à la longueur d'onde d'analyse $\lambda 1$ et la mesure à la longueur d'onde de référence $\lambda 0$.

Le document DE 35 18 527 A1 décrit un fluoromètre à impulsions approprié pour détecter des variations rapides du rendement de fluorescence de la chlorophylle suite à une irradiation de lumière.

En effet, il est bien connu, en photosynthèse et en écophysiologie végétale, que le rendement quantique de la fluorescence chlorophylienne est largement variable et qu'il dépend en partie de l'intensité lumineuse antérieurement reçue, par l'intermédiaire de mécanismes de "quenching" photochimiques et non-photochimiques.

En conséquence, la mesure de référence à la longueur d'onde $\lambda 0$ est délicate à réaliser, car il faut s'assurer que le rendement quantique de fluorescence de la chlorophylle n'a pas varié, ou a varié d'un facteur connu, entre le moment de la mesure à la longueur d'analyse et le moment de la mesure à la longueur d'onde de référence.

Une manière de faire est décrite par W. Bilger et coll., dans un article intitulé "Measurement of leaf epidermal transmittance of UV radiation by chlorophyll fluorescence" paru dans "Physiologia Plantarum" (Vol 101, pp 754-763, 1997). Les auteurs utilisent un fluorimètre dénommé "Xe-PAM" commercialisé par la société Walz (Effeltrich, Allemagne). Pour obtenir un état stable du rendement de fluorescence de la chlorophylle, ils effectuent la mesure sur des feuilles adaptées à l'obscurité et réduisent l'intensité des faisceaux lumineux d'analyse et de référence. Cependant, il en résulte un temps de mesure extrêmement long (pour s'assurer d'un bon rapport signal/bruit) qui se répartit en 30 mn d'adaptation à l'obscurité et 2 mn de mesure proprement dite. Un tel dispositif n'est donc pas adapté à une utilisation sur le terrain.

L'invention vise donc plus précisément un dispositif de mesure des caractéristiques d'absorption lumineuse d'un échantillon de tissu biologique selon la revendication 1.

Un des buts principaux de l'invention est de fournir un tel dispositif qui soit léger, portable, facilement utilisable sur le terrain, et qui permette de réaliser rapidement, avec une grande précision, un grand nombre d'échantillonnages pour des mesures de routine, de façon à permettre notamment, dans une première application particulièrement intéressante, l'évaluation *in vivo* du contenu de l'épiderme des feuilles en composés de la famille des phénols ou des phénylpropanoïdes.

Un autre but important de l'invention est de réaliser un dispositif de conception simple, de faible coût, d'utilisation aisée.

Ainsi, on peut utiliser la fluorescence d'un échantillon comme grandeur représentative de ses caractéristiques d'absorption lumineuse, même si l'échantillon, comme c'est le cas pour un échantillon biologique fluorescent contenant par exemple de la chlorophylle, présente une fluorescence variable. La boucle de régulation permet d'affranchir la mesure de ces variations.

D'autres caractéristiques du dispositif suivant l'invention, prises isolément ou suivant toutes les combinaisons techniquement envisageables, sont présentes dans les revendications dépendantes.

L'invention vise également un procédé de mesure des caractéristiques d'absorption lumineuse d'un échantillon de tissu biologique selon la revendication 25.

Des caractéristiques optionnelles du procédé suivant l'invention sont présentes dans les revendications dépendantes.

Comme cela a été mentionné précédemment, une utilisation du dispositif ou le procédé décrits plus haut consiste à mesurer les caractéristiques d'absorption lumineuse d'une feuille de végétal, en particulier pour réaliser la mesure de la concentration d'un épiderme de feuille en composés de la famille des phénols ou des phénylpropanoïdes.

Une telle utilisation peut avantageusement permettre d'estimer les besoins nutritionnels, en particulier azotés, d'une culture.

Naturellement, le dispositif et le procédé s'appliquent à des mesures de concentration d'autres composés chimiques. Il suffit pour cela d'adapter la longueur d'onde d'analyse, à savoir la longueur d'onde d'un des rayonnements lumineux émis par les moyens d'éclairage, aux composés à mesurer.

D'autres utilisations du dispositif ou le procédé décrits précédemment consistent à mesurer les caractéristiques d'absorption lumineuse d'un tissu animal ou humain contenant des dérivés de l'hémoglobine, ou encore à réaliser un diagnostic médical ou vétérinaire.

On va maintenant décrire des modes particuliers de réalisation de l'invention, donnés à titre d'exemples non limitatifs, en se référant aux dessins annexés sur lesquels :

- la figure 1 représente le spectre d'absorption des pigments photosynthétiques *in vivo* et le spectre de fluorescence de la chlorophylle en fonction de la longueur d'onde (donnée en nanomètres) du rayonnement incident ;
- la figure 2 représente le spectre d'absorption d'un phénylpropanoïde particulier, le Kaempferol, en fonction de la longueur d'onde (donnée en nanomètres) du rayonnement incident.
- la figure 3 est un schéma synoptique d'ensemble du dispositif de mesure conforme à l'invention, dans lequel est placé un échantillon à analyser constitué d'une feuille de végétal ;
- la figure 4 est un schéma synoptique de l'organe de contrôle et de commande de la figure 3 ;
- les figures 5A, 5B, 5C, 5D représentent l'évolution avec le temps, dans un intervalle de mesure, des intensités lumineuses respectivement du rayon d'analyse ultraviolet, du rayon de référence rouge, du rayonnement de fluorescence détecté en sortie d'échantillon, et de l'amplitude du signal de commande de la deuxième source lumineuse ;
- la figure 6 illustre un premier mode particulier de mise en oeuvre du dispositif de la figure 1 ;
- la figure 7 illustre un deuxième mode particulier de mise en oeuvre du dispositif de la figure 1 ; et
- la figure 8 représente une variante conforme à l'invention, du dispositif représenté à la figure 1.

Dans la description qui va suivre, on illustrera des modes particuliers de réalisation de l'invention notamment adaptés à la mesure de la concentration d'un épiderme de feuille en phénylpropanoïde.

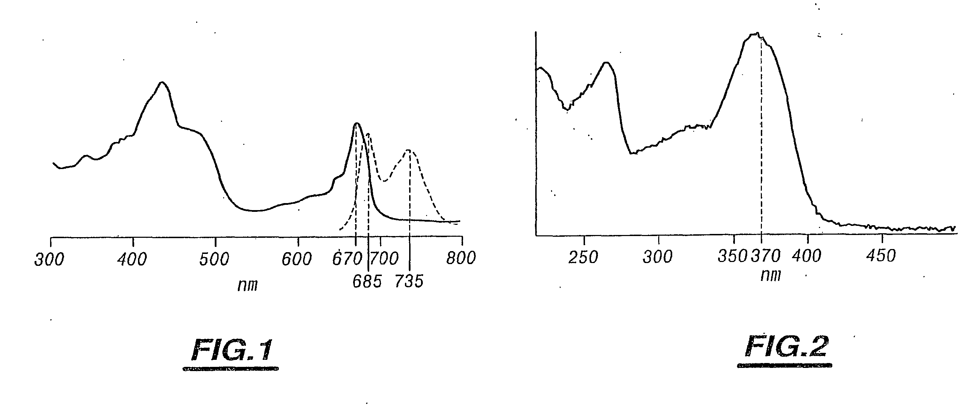

En préalable à la description détaillée d'un dispositif conforme à l'invention, il est utile de mentionner les propriétés optiques d'une part des pigments photosynthétiques *in vivo* (Figure 1), et d'autre part d'un phénylpropanoïde particulier, le Kaempferol, choisi à titre d'exemple (Figure 2).

Le spectre d'absorption des pigments photosynthétiques *in vivo* montre un premier pic d'absorption au voisinage de 430 nanomètres, et un deuxième pic d'absorption dans le domaine de la lumière rouge, au voisinage de 670 nanomètres.

Le spectre de fluorescence de la chlorophylle *in vivo* (représenté en traits pointillés) montre deux pics très rapprochés à 685 nanomètres environ et 735 nanomètres environ.

Sur la figure 2, on a représenté le spectre d'absorption du Kaempferol, qui montre un pic d'absorption principal à environ 370 nanomètres et une absorbance quasiment nulle pour les longueurs d'onde supérieures à 420 nanomètres.

Dans le cadre de l'utilisation de l'invention pour mesurer la concentration en Kaempferol dans l'épiderme d'une feuille de végétal, les pigments photosynthétiques contenus dans la feuille sont utilisés comme capteur émettant, par l'intermédiaire de la chlorophylle, un rayonnement de fluorescence dans le rouge en réponse à un signal d'excitation constitué par un rayonnement ultraviolet partiellement absorbé par le composé à doser contenu dans l'épiderme. On voit qu'un signal de référence dans le domaine visible rouge n'est pas absorbé par le phénylpropanoïde, de sorte que l'absorption de ce rayonnement n'est due qu'aux pigments photosynthétiques.

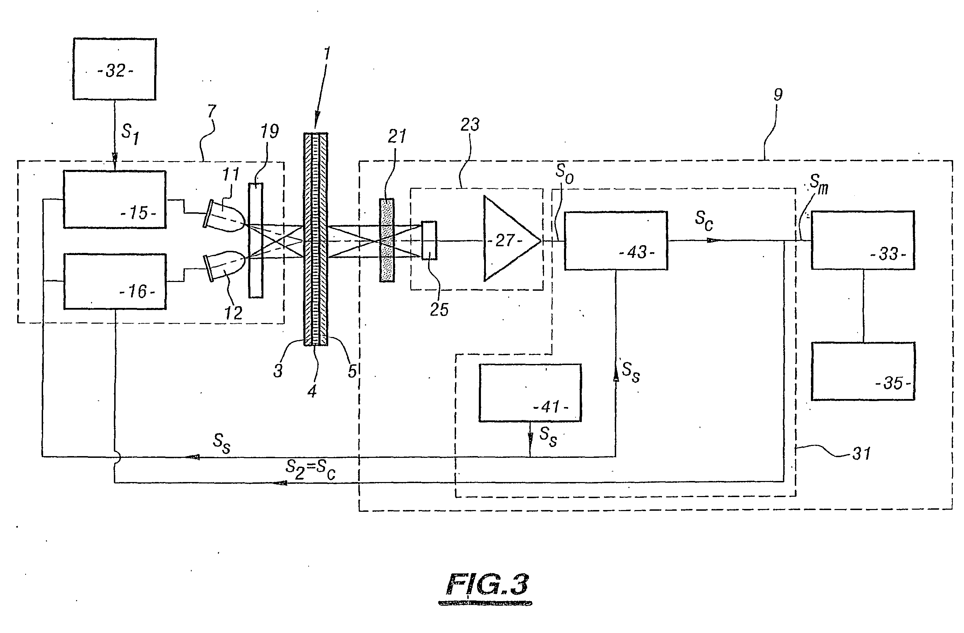

Sur la figure 3, on a représenté le schéma d'un dispositif suivant l'invention et d'un échantillon de tissu biologique, dont il faut évaluer la concentration en un composé chimique absorbeur.

L'échantillon 1 est, dans cet exemple particulier, une feuille de végétal comprenant, disposées en couches superposées, une première couche d'épiderme 3, une couche centrale de tissu qui contient la chlorophylle 4, et une deuxième couche d'épiderme 5.

Le dispositif comporte essentiellement des moyens 7 d'éclairage de l'échantillon 1, et des moyens 9 de réception et d'analyse du rayonnement lumineux de sortie issu de l'échantillon 1. Les moyens d'éclairage 7 et les moyens de réception et d'analyse 9 sont représentés, dans ce mode de réalisation particulier, de part et d'autre de l'échantillon 1, le rayonnement lumineux de sortie étant un rayonnement transmis par l'échantillon 1.

Les moyens d'éclairage 7 comportent une première source lumineuse 11 et une deuxième source lumineuse 12, constituées par exemple de diodes électroluminescentes, la première source 11 émettant dans une gamme de longueur d'onde correspondant au domaine ultraviolet, de préférence dans la gamme 300-390 nm, de préférence encore à 370 nm, tandis que la deuxième source lumineuse 12 émet dans une gamme de longueur d'onde correspondant au domaine de la lumière rouge, de préférence environ 670 nm. Chaque source 11,12 est alimenté électriquement par une alimentation électrique respective 15,16, et dirigée vers l'emplacement de l'échantillon 1.

Un premier filtre optique 19 est interposé entre les sources lumineuses 11,12 et l'emplacement de l'échantillon 1, de façon que les rayonnements lumineux issus des sources 11,12 présentent un spectre de longueur d'onde concentré au voisinage de la longueur d'onde principale, à savoir respectivement 370 nm et 670 nm. Naturellement, le filtrage du premier rayonnement lumineux émis par la première source 11 d'une part, et du deuxième rayonnement lumineux émis par la deuxième source 12 d'autre part, peut être effectué par deux filtres distincts fonctionnant chacun pour une longueur d'onde donnée.

Les moyens de réception et d'analyse 9 comportent un deuxième filtre optique 21 et des moyens convertisseurs 23, le deuxième filtre optique 21 étant interposé entre l'emplacement de l'échantillon 1 et les moyens convertisseurs 23. Ainsi, les moyens convertisseurs 23 reçoivent le rayonnement lumineux transmis par l'échantillon 1 et filtré par le deuxième filtre optique 21 pour éliminer les rayonnements parasites, en particulier les rayonnements issus des première et deuxième sources 11, 12. Grâce à cette disposition, seul le rayonnement de fluorescence atteint les moyens convertisseurs 23.

Les moyens convertisseurs 23 sont essentiellement constitués d'un photodétecteur 25 qui convertit le signal optique issu du filtre 21 en signal électrique, et d'un préamplificateur 27 du signal électrique issu dudit photodétecteur 25.

Le signal électrique issu des moyens convertisseurs 23, et correspondant au rayonnement détecté en sortie de l'échantillon 1, sera appelé par la suite "signal de contrôle" $S_0$. Les moyens de réception et d'analyse 9 comportent d'autre part des moyens électroniques de contrôle et de commande 31 reliés aux moyens convertisseurs 23 de façon à recevoir le signal de contrôle $S_0$.

La première alimentation électrique 15 est commandée par un signal de commande $S_1$ issu d'un organe régulateur 32, de sorte que l'intensité délivrée par l'alimentation 15 est constante à un niveau éventuellement réglable. Ainsi, l'intensité lumineuse délivrée par une première source 11 est dépendante du signal de commande $S_1$, en l'occurrence constante.

L'organe régulateur 32 peut éventuellement être pourvu d'une commande manuelle de réglage d'amplitude.

Les moyens de contrôle et de commande 31 sont reliés en sortie à l'alimentation électrique 16 de façon à émettre vers elle un signal de commande respectif $S_2$. Ainsi, l'intensité lumineuse délivrée par la deuxième source lumineuse 12 est dépendante du signal de commande $S_2$ délivré à l'alimentation électrique 16 par les moyens de contrôle et de commande 31.

Les moyens de contrôle et de commande 31 délivrent d'autre part un signal de mesure $S_m$ à un calculateur 33 adapté pour calculer les caractéristiques d'absorption de l'échantillon 1 analysé, en fonction du signal de mesure $S_m$.

Le calculateur 33 est relié de préférence à un périphérique 35, tel qu'un écran d'affichage et/ou un organe de stockage de données.

Les moyens de contrôle et de commande 31 comportent des moyens de synchronisation 41 et un organe de contrôle et de commande 43 possédant deux entrées, dont l'une est reliée aux moyens convertisseurs 23 de façon à recevoir le signal de contrôle $S_0$, et l'autre est relié aux moyens de synchronisation 41 de façon à recevoir le signal de synchronisation $S_s$ issu des moyens de synchronisation 41. L'organe de contrôle et de commande 43 possède en outre une sortie reliée au calculateur 33, de sorte que le signal de commande $S_c$ élaboré par l'organe de contrôle et de commande 43 est transmis au calculateur 33.

Les moyens de synchronisation 41 sont également reliés à des entrées respectives des première 15 et deuxième 16 alimentations électriques, pour leur transmettre le signal de synchronisation $S_s$.

Dans l'exemple représenté, le signal de mesure $S_m$ est constitué du signal de commande $S_c$, lequel est également transmis à une deuxième entrée de la deuxième alimentation électrique 16.

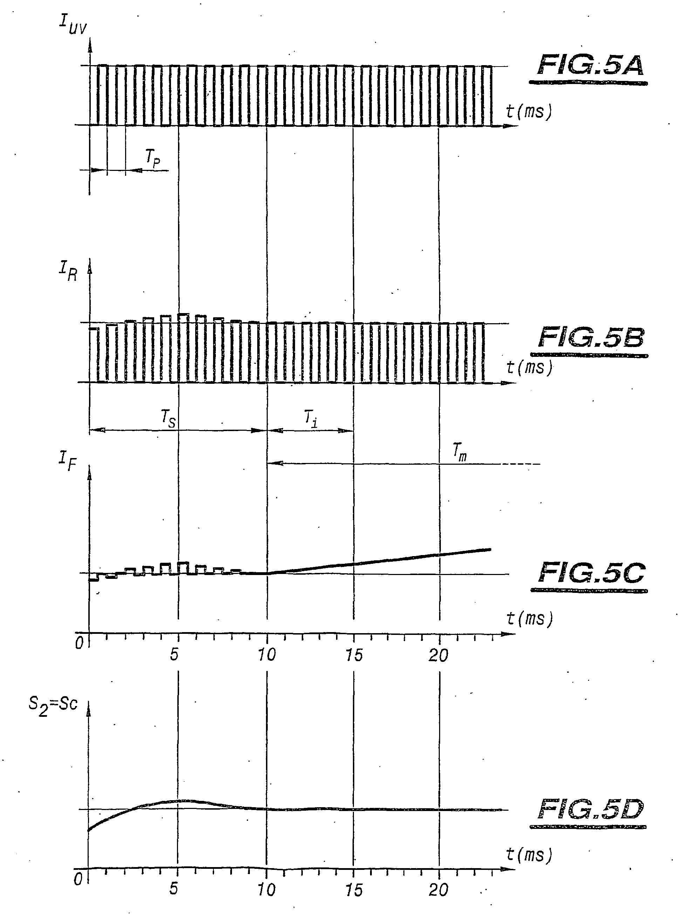

La première alimentation électrique 15 est par exemple une alimentation pulsée fonctionnant avec une base de temps définie par le signal de synchronisation, par exemple un signal impulsionnel de fréquence de l'ordre de 1 kHz ou supérieure à cette valeur. Le premier signal de commande $S_1$ qui commande le fonctionnement de l'alimentation pulsée 15 est alors défini comme le signal de synchronisation $S_s$, l'alimentation pulsée 15 délivrant à la première source lumineuse 11 un signal en créneau (Figure 5A) d'amplitude constante, de sorte que l'intensité du rayonnement UV émis en réponse par la première source 11 a une intensité variable entre 0 et une valeur maximale fixe (ou amplitude fixe) suivant un profil en créneau.

Le fonctionnement de la deuxième alimentation électrique 16 est calé sur le fonctionnement de l'alimentation pulsée 15 avec la même base de temps définie par le signal de synchronisation $S_s$, de sorte que l'intensité lumineuse du rayon émis par la deuxième source lumineuse 12 est variable suivant un profil en créneau (Figure 5B) de même

période $T_p$, entre 0 et une valeur maximale de crête modulée par le signal de commande $S_2$. Dans l'exemple représenté, le deuxième signal de commande $S_2$ est constitué du signal de commande $S_c$ issu de l'organe de contrôle et de commande 43.

On définit ainsi une boucle de régulation agissant en rétroaction sur la commande de la deuxième alimentation électrique 16, en fonction du signal de contrôle $S_0$ correspondant à l'intensité lumineuse du rayonnement transmis par l'échantillon 1.

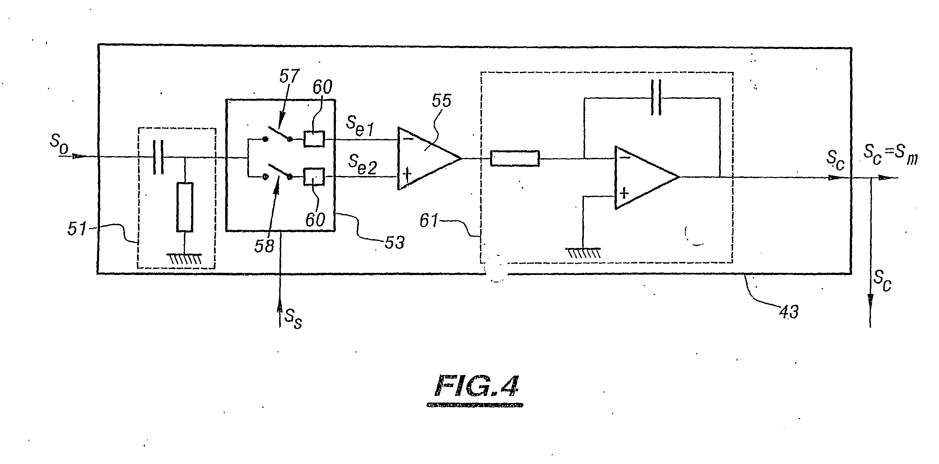

En référence à la figure 4, on va maintenant décrire plus en détail l'organe de contrôle et de commande 43 représenté sur la figure 3.

Cet organe 43 reçoit en entrée le signal de contrôle $S_0$, et comporte, directement en entrée, un filtre passe-haut 51 permettant d'éliminer les signaux parasites de basses et moyennes fréquences.

Il comporte en outre un démultiplexeur 53 et un amplificateur différentiel 55, le démultipexeur 53 étant commandé par le signal de synchronisation $S_s$ et comportant par exemple deux échantillonneurs-bloqueurs (ou interrupteurs analogiques à mémoire) 57,58 reliant la sortie du filtre passe-haut 51 respectivement à l'entrée inverseuse de l'amplificateur différentiel 55 et à son entrée non-inverseuse. Chaque interrupteur 57, 58 est pourvu d'un moyen de mémorisation 60, sous la forme par exemple d'un composant capacitif relié à une ligne de référence de potentiel 0 Volt. Le signal de synchronisation $S_s$ commande alternativement à ouverture et fermeture les interrupteurs 57,58.

L'organe de contrôle et de commande 43 comporte, connecté à la sortie de l'amplificateur différentiel 55, un circuit intégrateur 61 de structure classique, qu'il est inutile de détailler ici, qui élabore un signal intégré sur une ou plusieurs périodes du signal de synchronisation. Ce signal constitue le signal de mesure $S_m$ et le signal de commande $S_c$.

Le fonctionnement du dispositif décrit précédemment sera mieux compris en se référant aux figures 5A, 5B, 5C et 5D.

Comme illustré sur les figures 5A et 5B, les premier et deuxième rayonnements lumineux sont émis par les moyens d'éclairage 7 en décalage de phase, plus précisément en opposition de phase. Le signal de synchronisation $S_S$ étant choisi à une fréquence de 1 kHz, les signaux lumineux sont périodiques en créneaux de période $T_p$ égale à 1 ms, l'intensité de chaque rayonnement étant maximale sur une demi-période et nulle sur l'autre demi-période.

L'amplitude de l'intensité lumineuse du rayonnement UV d'analyse est, comme cela a déjà été mentionné précédemment, d'amplitude constante, tandis que l'amplitude de l'intensité lumineuse du rayonnement rouge de référence (de la deuxième source lumineuse) est d'amplitude régulée.

Une phase d'intensité maximale du rayonnement UV (ou rayonnement d'analyse) correspond à une intensité nulle du rayonnement rouge (ou rayonnement de référence), et inversement.

On définit les intervalles de temps suivants :

- un intervalle de mesure $T_m$ sur lequel la mesure proprement dite est effectuée, correspondant de préférence à un grand nombre de périodes $T_p$. La durée de mesure Tm est choisie de façon à avoir une bonne reproductibilité de la mesure à l'aide d'un moyennage suffisant effectué par les moyens de calcul 33, qui peuvent être analogiques ou numériques. Dans l'exemple considéré 600 ms ;
- un intervalle d'intégration $T_i$ d'au moins une période $T_p$, de préférence de durée très inférieure à celle de l'intervalle de mesure $T_m$. Dans l'exemple considéré, $T_i$ est de durée égale à cinq périodes $T_p$, soit 5 ms ;
- un intervalle de stabilisation $T_S$ qui sera explicité plus loin.

La régulation est effectuée de façon que, sur l'intervalle d'intégration $T_i$, l'intensité du rayonnement de fluorescence $I_F$, prise, en l'occurrence sommée, sur les phases d'émission du rayonnement UV, soit égale à l'intensité du rayonnement de fluorescence $I_F$, prise, en l'occurrence sommée, sur les phases d'émission du rayonnement rouge.

Sur la figure 5C, où l'on a représenté l'évolution de l'intensité de fluorescence $I_F$ (ou intensité du rayonnement de sortie), on voit qu'après l'intervalle de stabilisation $T_S$, $I_F$ varie de façon lente et quasiment continue de sorte qu'elle ne présente plus de variations rapides dues à l'alternance des sources lumineuses. Ceci est le résultat recherché par la boucle de régulation décrite ci-après.

Pour cela, le signal de contrôle $S_0$, en sortie du filtre 51, est "démultiplexé", c'est-à-dire décomposé en un premier signal élémentaire $S_{e1}$ dirigé sur l'entrée inverseuse de l'amplificateur différentiel 55, et en un deuxième signal élémentaire $S_{e2}$ dirigé vers l'entrée non inverseuse de l'amplificateur différentiel 55. Sur une phase d'émission du premier rayonnement (rayonnement UV), c'est-à-dire pour $I_{UV}$ maximum, le premier interrupteur 57 est fermé et le deuxième interrupteur 58 est ouvert. A l'inverse, sur une phase d'émission du deuxième rayonnement (rayonnement rouge), c'est-à-dire pour $I_R$ maximum et $I_{UV}$ nul, le deuxième interrupteur 58 est fermé tandis que le premier interrupteur 57 est ouvert, Grâce aux moyens de mémorisation 60, les signaux élémentaires $S_{e1}$, $S_{e2}$ sont à chaque instant significatifs de l'amplitude d'intensité du rayonnement respectif $I_{UV}$, $I_R$ détecté sur la demi-période correspondante.

Le circuit intégrateur 61 intègre sur l'intervalle de temps d'intégration $T_i$, un signal alternatif significatif, dans ses phases positives, de la différence entre l'intensité du rayonnement de référence et l'intensité du rayonnement d'analyse pendant la demi-période précédente, et dans ses phases négatives, de la différence entre l'intensité du rayonnement d'analyse et l'intensité du rayonnement de référence pendant la demi-période précédente. L'intégration du signal de sortie de l'amplificateur différentiel 55 fournit un signal différentiel significatif de la différence des contributions du rayonnement d'analyse d'une part, et du rayonnement de référence d'autre part, dans le rayonnement de fluorescence détecté.

La régulation vise à atteindre et maintenir une valeur d'intensité de rayonnement de référence, telle que cette valeur différentielle soit nulle en moyenne sur l'intervalle d'intégration, malgré les possibles variations du rendement de fluorescence induites par les moyens d'éclairage.

L'expression de l'absorbance de l'échantillon, devient alors, en partant de l'équation donnée en préambule de cette demande :

$$A = -Log[F1/F0 \times (I0.k0)/(I1.k1)] = -Log[1 \times (I0.k0)/(I1.k1)]$$

soit, en identifiant $I_R$ à I0 : $A = -Log(I_R) + K$, où K est une constante instrumentale qui ne varie pas d'une mesure à l'autre.

Le signal de mesure $S_m$, qui est ici égal au signal de commande $S_c$, est donc directement significatif de l'absorbance de l'échantillon due au phénylpropanoïde présent dans l'épiderme.

Comme cela est montré sur les figures 5B et 5C, le dispositif amène l'intensité de rayonnement $I_R$ à une valeur d'amplitude telle que le rayonnement de sortie est d'intensité $I_F$ présentant une évolution lente et continue, au terme d'un intervalle de temps $T_S$ de stabilisation de la boucle de régulation. La boucle de régulation est conçue pour parvenir à cet équilibre au terme d'un intervalle de temps $T_S$ relativement court, à savoir par exemple une dizaine de périodes $T_P$.

A partir de cet instant, l'amplitude d'intensité $I_R$ est maintenue sensiblement constante, même en cas de variation sensible de l'intensité de sortie $I_F$ induite par les moyens d'éclairage, ou par une modification des conditions expérimentales.

Sur la figure 5D, on a illustré l'évolution correspondante du signal de commande $S_c$ en fonction du temps, à savoir l'évolution du signal de commande $S_2$ de l'alimentation 16 de la source rouge 12.

La mesure des caractéristiques d'absorption est donnée, comme on l'a vu, par la valeur de $I_R$ prise en moyenne sur cet intervalle de mesure, c'est-à-dire par l'amplitude (moyenne) du signal de commande $S_2$ (ou $S_C$).

Précisons enfin que l'intensité $I_{UV}$ du rayonnement UV est de préférence constant d'une mesure à l'autre, par souci de simplicité du dispositif, tandis que l'intensité $I_R$ de lumière rouge est constante dans l'intervalle de mesure, mais variable d'une mesure à l'autre.

Il va de soi qu'une régulation et un résultat analogues peuvent être obtenus en maintenant constant non pas le rayonnement d'analyse (UV), mais le rayonnement de référence (rouge).

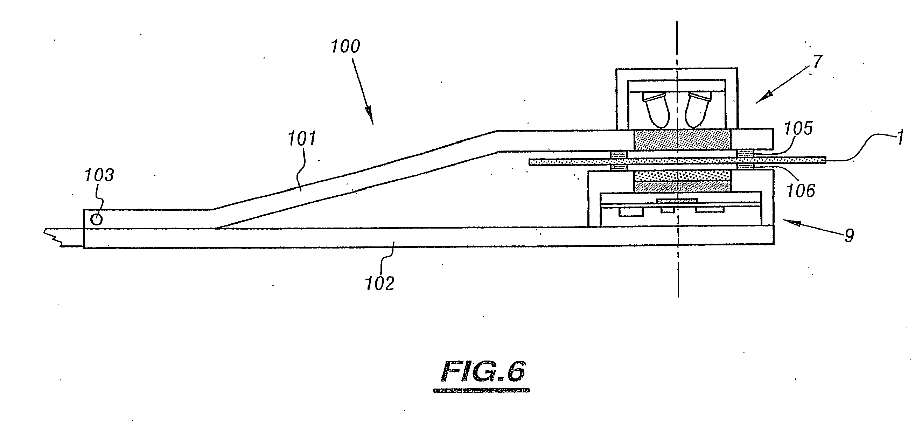

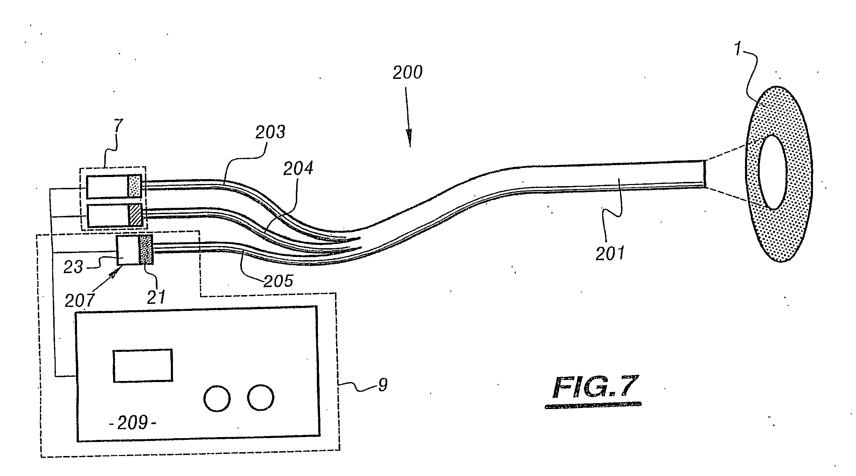

Sur les figures 6 et 7, on a représenté deux modes particuliers de mise en oeuvre de l'invention.

Sur la figure 6, le dispositif se présente sous la forme d'une pince 100 comportant deux branches 101,102 articulées au niveau d'une articulation à pivot 103. La première branche 101 est pourvue des moyens d'éclairage 7, tandis que la deuxième branche 102 est pourvue des moyens de réception et d'analyse 9. Chacune des branches 101,102 est également pourvue d'un joint annulaire respectif 105,106 en matériau élastique opaque, disposé en regard l'un de l'autre, de façon, lorsque les branches 101,102 sont en position fermée, à assurer une obscurité suffisante dans la région de l'échantillon 1 pour éviter les perturbations dues à la lumière ambiante, et à éviter tout contact entre l'échantillon 1 et les parties dures de l'appareil qui pourraient l'endommager.

Ainsi, un tel dispositif est particulièrement adapté pour effectuer, avec une grande rapidité, des mesures *in vivo* sur des échantillons tels que des feuilles de végétaux.

Suivant un deuxième mode particulier de mise en oeuvre de l'invention représenté à la figure 7, le dispositif 200 peut comporter un faisceau de fibres optiques 201. Le faisceau de fibres optiques 201 comporte trois faisceaux secondaires 203, 204 et 205 dont les deux premiers 203,204 sont reliés aux moyens d'éclairage 7, individuellement à chaque source lumineuse, et le troisième est relié aux moyens de réception et d'analyse 9, en particulier à un sous-ensemble 207 comportant le deuxième filtre optique 21 et les moyens convertisseurs 23. Le sous-ensemble 207 est relié électriquement à un instrument 209 comprenant les moyens de contrôle et de commande, le calculateur et le périphérique.

Pendant une mesure, une extrémité du faisceau 201 est amenée au voisinage de l'échantillon 1, le faisceau transmettant les rayons lumineux issus de moyens d'éclairage 7 jusqu'à l'échantillon 1, et le rayon réfléchi issu de l'échantillon 1, en sens inverse, jusqu'au sous-ensemble 207.

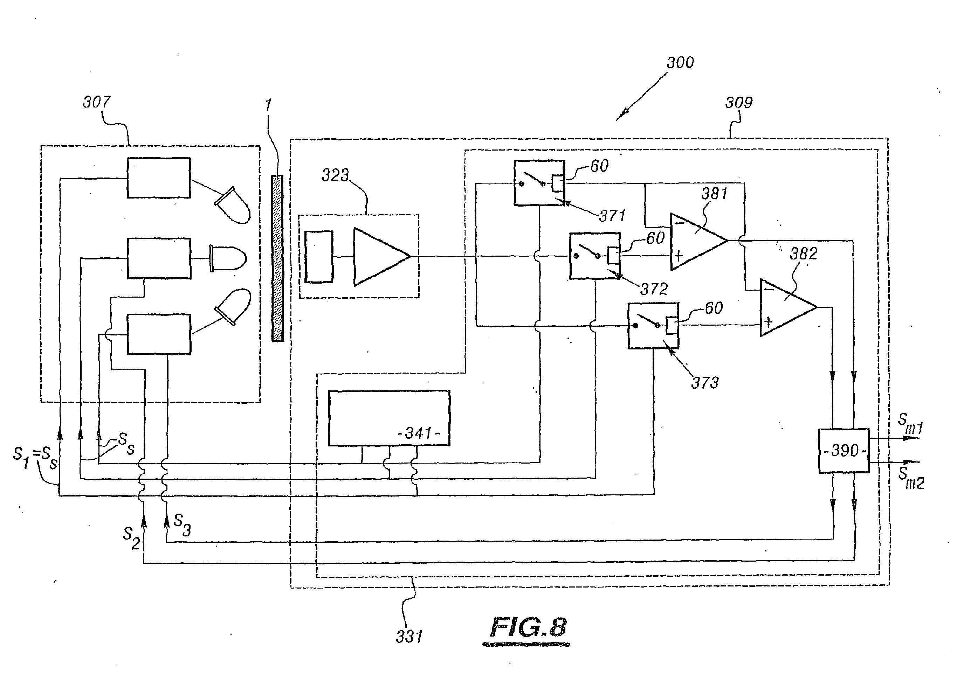

Sur la figure 8, on a représenté un dispositif 300 correspondant à un mode particulier de réalisation de l'invention, dans lequel les sources lumineuses sont d'un nombre supérieur à deux, en l'occurrence trois sources lumineuses émettant à des longueurs d'onde différentes.

Par exemple, l'une des sources lumineuses émet dans le domaine rouge, le rayonnement issu de cette source lumineuse constituant le rayonnement de référence. Les deux autres sources lumineuses peuvent émettre dans le domaine ultraviolet, à des longueurs d'onde différentes, de façon à permettre de mesurer la concentration de l'échantillon 1 en composés différents, par exemple deux composés chimiques différents de la famille des phénylpropanoïdes, dont les spectres d'absorption présentent des pics aux longueurs d'onde des deux sources lumineuses. Les moyens d'éclairage qui comprennent ces trois sources lumineuses ont été repérés sur la figure par la référence 307.

Les moyens de réception et d'analyse 309 sont similaires à ce qui a été décrit précédemment, mais ont été simplifiés sensiblement pour la clarté du schéma.

De la même façon que dans le mode de réalisation de la figure 3, les moyens de réception et d'analyse 309 comportent des moyens convertisseurs 323, des moyens de synchronisation 341, reliés d'une part aux moyens d'éclairage 307, et d'autre part à chacun de trois échantillonneurs-bloqueurs (ou interrupteurs analogiques à mémoire) 371, 372, 373. De façon analogue à ce qui a été décrit précédemment, le premier interrupteur 371 est relié à l'entrée inverseuse d'un premier amplificateur différentiel 381 d'une part, et à l'entrée inverseuse d'un deuxième amplificateur différentiel 382 d'autre part. Les deux autres interrupteurs 372, 373 sont reliés chacun à l'entrée non-inverseuse respectivement du premier amplificateur différentiel 381, et du deuxième amplificateur différentiel 382.

Les trois sources lumineuses des moyens d'éclairage 307 fonctionnent de façon alternative sur chaque période de synchronisation, c'est-à-dire que l'une des sources émet à la valeur maximale d'intensité lumineuse sur le tiers d'une période, tandis que les deux autres sources n'émettent pas, chaque source émettant de façon périodique à la même période définie par les moyens de synchronisation 341. L'amplitude de l'intensité du rayonnement de l'une des sources est constante à l'image de l'amplitude du rayonnement UV du premier mode de réalisation, tandis que l'amplitude de l'intensité du rayonnement des deux autres sources est régulée par des moyens analogues à ceux du premier mode de réalisation.

La contribution dans l'intensité du rayonnement de fluorescence détectée, due à chaque rayonnement dont l'intensité est d'amplitude variable, est comparée à la contribution du rayonnement d'amplitude constante. Cette différence est réalisée par les amplificateurs différentiels 381, 382, et intégrée sur plusieurs périodes du signal de synchronisation, de façon à établir les signaux de consigne en amplitude pour les deux sources d'amplitude variable. L'organe qui effectue l'intégration des signaux différentiels et qui élabore les signaux de consigne transmis aux sources lumineuses, ainsi que les signaux de mesure $S_{m1}$, $S_{m2}$ transmis au calculateur, est désigné sur ce schéma par la référence 390. La constitution de cet organe 390 ne sera pas décrite plus en détail, puisque l'analogie avec le fonctionnement du premier mode de réalisation représenté à la figure 3 suffit à en comprendre le fonctionnement. Dans ce mode de réalisation, il y a deux signaux de mesure $S_{m1}$, $S_{m2}$, qui correspondent respectivement à l'absorbance à chacune des deux longueurs d'onde considérées.

## Revendications

1. Dispositif de mesure des caractéristiques d'absorption lumineuse d'un échantillon de tissu biologique comportant :

   - des moyens (7 ; 307) d'éclairage de l'échantillon (1), adaptés pour émettre alternativement au moins un premier et un deuxième rayonnements lumineux vers l'échantillon, lesdits rayonnements étant respectivement d'une première et d'une deuxième longueurs d'onde différentes l'une de l'autre ;
   - des moyens (9) de réception et d'analyse du rayonnement lumineux de sortie issu de l'échantillon (1), lesdits moyens de réception et d'analyse (9) comportant des moyens convertisseurs (23) dudit rayonnement de sortie en signal de contrôle ($S_0$) ;
   - des moyens de contrôle et de commande (31 ; 331) recevant en entrée le signal de contrôle ($S_0$) et émettant en sortie au moins des premier ($S_1$) et deuxième ($S_2$) signaux de commande des moyens d'éclairage (7 ; 307), correspondant respectivement aux premier et deuxième rayonnements, et au moins un signal de mesure ($S_m$) ; et
   - des moyens de calcul (33) des caractéristiques d'absorption de l'échantillon (1), adaptés pour recevoir en entrée ledit signal de mesure ($S_m$) et calculer lesdites caractéristiques en fonction dudit signal de mesure ($S_m$),

   **caractérisé en ce que** lesdits moyens de contrôle et de commande (31 ; 331) sont adaptés pour que l'intensité lumineuse ($I_{UV}$. $I_R$) de chacun des rayonnements varie de façon périodique, avec la même période, en décalage de phase l'une par rapport à l'autre, et pour réguler l'un au moins des signaux de commande ($S_1$, $S_2$) en fonction du signal de contrôle ($S_0$), de façon que, sur un intervalle de temps d'intégration ($T_i$) d'au moins une période ($T_p$) de variation desdits rayonnements, l'amplitude dudit signal de contrôle ($S_o$), prise sur les phases d'émission de l'un des rayonnements, soit égale à l'amplitude du signal de contrôle ($S_o$), prise sur les phases d'émission de l'autre rayonnement, et **en ce que** le signal de mesure ($S_m$) est significatif de l'un au moins desdits signaux de commande ($S_1$, $S_2$) sur l'intervalle de temps d'intégration ($T_i$).

**2.** Dispositif de mesure suivant la revendication 1, **caractérisé en ce que** les moyens de contrôle et de commande sont adaptés pour délivrer un premier signal de commande ($S_1$), tel que l'amplitude de l'intensité lumineuse ($I_{UV}$) du premier rayonnement soit constante, tandis que l'amplitude du deuxième signal ($S_2$) est régulée par lesdits moyens de contrôle et de commande (31).

**3.** Dispositif de mesure suivant la revendication 2, **caractérisé en ce que** ledit signal de mesure ($S_m$) est constitué dudit deuxième signal ($S_2$) sur l'intervalle de temps d'intégration ($T_i$).

**4.** Dispositif de mesure suivant l'une quelconque des revendications 1 à 3, **caractérisé en que** les moyens d'éclairage comportent des première (11) et deuxième (12) sources lumineuses adaptées pour émettre respectivement les premier et deuxième rayonnements, alimentées électriquement par des première (15) et deuxième (16) alimentations électriques respectives, lesdites alimentations (15, 16) étant commandées respectivement par les premier et deuxième signaux de commande.

**5.** Dispositif de mesure suivant la revendication 4, **caractérisé en ce que** l'une au moins des sources lumineuses (11, 12) est une diode électroluminescente.

**6.** Dispositif de mesure suivant la revendication 4 ou 5, **caractérisé en ce que** la première source lumineuse (11) émet le premier rayonnement dans une gamme de longueur d'onde correspondant au domaine ultra-violet, notamment de 300 à 390 nm, notamment environ 370 nm.

**7.** Dispositif de mesure suivant l'une quelconque des revendications 4 à 6, **caractérisé en ce que** la deuxième source lumineuse (12) émet le deuxième rayonnement dans une gamme de longueur d'onde correspondant au domaine de la lumière rouge, notamment environ 670 nm.

**8.** Dispositif de mesure suivant l'une quelconque des revendications 4 à 7, **caractérisé en ce que** les moyens d'éclairage (7 ; 307) comportent au moins un filtre optique (19) adapté pour filtrer les rayonnements des sources lumineuses (11, 12) émis vers l'échantillon (1).

**9.** Dispositif de mesure suivant l'une quelconque des revendications 1 à 8, **caractérisé en ce que** les moyens de contrôle et de commande (31 ; 331) comportent des moyens de synchronisation (41) reliés aux moyens d'éclairage (7), émettant au moins un signal périodique de synchronisation ($S_s$) vers lesdits moyens d'éclairage (7), de sorte que l'intensité lumineuse ($I_{UV}$, $I_R$) de chacun des rayonnements varie de façon périodique, en décalage de phase l'une par rapport à l'autre.

**10.** Dispositif de mesure suivant la revendication 9, **caractérisé en ce que** les moyens de synchronisation (41) sont adaptés pour faire varier l'intensité lumineuse ($I_{UV}$, $I_R$) des premier et deuxième rayonnements avec une fréquence supérieure à une valeur minimale sensiblement égale à 1 kHz.

**11.** Dispositif de mesure suivant la revendication 9 ou 10, **caractérisé en ce que** les moyens de contrôle et de commande (31 ; 331) comportent un organe de contrôle et de commande (43) relié aux moyens de synchronisation (41) de façon à recevoir le signal de synchronisation ($S_s$), et recevant en entrée le signal de contrôle ($S_o$).

**12.** Dispositif de mesure suivant la revendication 11, **caractérisé en ce que** ledit organe de contrôle et de commande comporte un filtre passe-haut (51) adapté pour filtrer le signal de contrôle ($S_o$) en entrée.

**13.** Dispositif de mesure suivant la revendication 11 ou 12, **caractérisé en ce que** ledit organe de contrôle et de commande (43) comporte un organe démultiplexeur (53) recevant en entrée, d'une part un signal significatif du signal de contrôle ($S_o$), et d'autre part le signal de synchronisation ($S_s$), ledit organe démultiplexeur étant adapté pour fournir en sortie un premier signal élémentaire ($S_{e1}$) significatif du niveau d'intensité du rayonnement de sortie ($I_F$) lors d'une phase d'émission du premier rayonnement, et un deuxième signal élémentaire ($S_{e2}$) significatif du niveau d'intensité du rayonnement de sortie lors d'une phase d'émission du deuxième rayonnement.

**14.** Dispositif de mesure suivant la revendication 13, **caractérisé en ce que** l'organe démultiplexeur (53) comporte au moins deux moyens d'interruption (57, 58) commandés alternativement à ouverture et fermeture par le signal de synchronisation ($S_s$), et un moyen de mémorisation (60) associé à chacun desdits moyens d'interruption (57, 58).

**15.** Dispositif de mesure suivant les revendications 12 et 13 prises ensemble, **caractérisé en ce que** ledit signal significatif du signal de contrôle ($S_o$) est le signal de contrôle filtré par ledit filtre passe-haut (51).

16. Dispositif de mesure suivant l'une quelconque des revendications 13 à 15, **caractérisé en ce que** l'organe de contrôle et de commande (43) comporte un amplificateur différentiel (55) dont l'entrée inverseuse reçoit le premier signal élémentaire ($S_{e1}$), et l'entrée non-inverseuse reçoit le deuxième signal élémentaire ($S_{e2}$).

17. Dispositif de mesure suivant la revendication 16, **caractérisé en ce que** l'organe de contrôle et de commande (43) comporte un circuit intégrateur (61) alimenté en entrée par le signal de sortie dudit amplificateur différentiel (55), et adapté pour émettre un signal Intégré sur au moins une période du signal de synchronisation ($S_s$).

18. Dispositif de mesure suivant la revendication 17, **caractérisé en ce que** ledit signal intégré constitue le signal de mesure ($S_m$).

19. Dispositif de mesure suivant l'une quelconque des revendications 1 à 18, **caractérisé en ce que** les moyens convertisseurs (23) comportent un photo-détecteur (25) qui convertit un signal optique en signal électrique, et un préamplificateur (27) du signal électrique issu dudit photo-détecteur (25).

20. Dispositif de mesure suivant l'une quelconque des revendications 1 à 19, **caractérisé en ce que** les moyens de réception et d'analyse (9) comportent un filtre optique (21) interposé entre l'échantillon (1) et les moyens convertisseurs (23).

21. Dispositif de mesure suivant l'une quelconque des revendications 1 à 20, **caractérisé en ce que** les moyens de calcul (33) sont reliés en sortie à au moins un périphérique (35), notamment un écran d'affichage et/ou un organe de stockage de données.

22. Dispositif de mesure suivant l'une quelconque des revendications 1 à 21, **caractérisé en ce que** les moyens d'éclairage (307) sont adaptés pour émettre alternativement trois rayonnements de longueurs d'onde différentes, les moyens de contrôle et de commande (331) étant adaptés pour délivrer trois signaux de commande ($S_1$, $S_2$, $S_3$) correspondants, un premier signal de commande ($S_1$) étant tel que l'amplitude de l'intensité lumineuse du premier rayonnement soit constante, tandis que les amplitudes respectives des deuxième ($S_2$) et troisième ($S_3$) signaux sont régulées par lesdits moyens de contrôle et de commande (331).

23. Dispositif de mesure suivant l'une quelconque des revendications 1 à 22, **caractérisé en ce qu'**il présente une structure de pince (100) comportant deux branches (101, 102) articulées l'une sur l'autre de façon à pouvoir enserrer un échantillon, la première branche (101) étant pourvue des moyens d'éclairage (7) et la deuxième branche (102) étant pourvue des moyens de réception et d'analyse (9).

24. Dispositif de mesure suivant l'une quelconque des revendications 1 à 22, **caractérisé en ce qu'**il comporte un faisceau de fibres optiques (201) par lequel transitent le rayonnement issu des moyens d'éclairage (7) et le rayonnement issu de l'échantillon (1), ce dernier rayonnement étant un rayonnement réfléchi.

25. Procédé de mesure des caractéristiques d'absorption lumineuse d'un échantillon de tissu biologique, dans lequel on réalise les opérations suivantes :

    - on éclaire l'échantillon (1) alternativement par des premier et deuxième rayonnements de longueurs d'onde différentes et d'intensités ($I_{UV}$, $I_R$) périodiques et de même période, par des moyens d'éclairage (7 ; 307);
    - on détecte le rayonnement issu de l'échantillon (1), et on analyse ledit rayonnement ;
    - on commande lesdits moyens d'éclairage (7 ; 307) en fonction dudit rayonnement détecté ;

    **caractérisé en ce qu'**on réalise ladite commande de la façon suivante :

    - on régule l'intensité des premier et deuxième rayonnements ($I_{UV}$, $I_R$), de sorte que, sur un intervalle de temps d'intégration ($T_i$) d'au moins une période ($T_p$) de variation desdits rayonnements, l'intensité ($I_F$) du rayonnement de sortie, prise sur les phases d'émission de l'un des premier et deuxième rayonnements, soit égale à l'intensité ($I_F$) du rayonnement de sortie, prise sur les phases d'émission de l'autre des premier et deuxième rayonnements ; et
    - on calcule les caractéristiques d'absorption lumineuse de l'échantillon en fonction de l'intensité de consigne de l'un ($I_R$) desdits premier et deuxième rayonnements, prise sur un intervalle de temps de mesure ($T_m$).

26. Procédé selon la revendication 25, **caractérisé en ce qu'**on maintient constante l'amplitude d'intensité ($I_{UV}$) de l'un desdits premier et deuxième rayonnements, tandis que l'on régule l'amplitude d'intensité ($I_R$) de l'autre desdits rayonnements.

27. Procédé selon la revendication 25 ou 26, **caractérisé en qu'**on filtre le rayonnement issu de l'échantillon (1) avant de l'analyser.

28. Utilisation du dispositif suivant l'une quelconque des revendications 1 à 24 ou procédé suivant l'une quelconque des revendications 25 à 27 pour mesurer les caractéristiques d'absorption lumineuse d'une feuille de végétal, en particulier pour réaliser la mesure de la concentration d'un épiderme de feuille en composés de la famille des phénols ou des phénylpropanoïdes.

29. Utilisation du dispositif suivant l'une quelconque des revendications 1 à 24 ou procédé suivant l'une quelconque des revendications 25 à 27 pour estimer les besoins nutritionnels, en particulier azotés, d'une culture.

30. Utilisation du dispositif suivant l'une quelconque des revendications 1 à 24 ou procédé suivant l'une quelconque des revendications 25 à 27 pour mesurer les caractéristiques d'absorption lumineuse d'un tissu animal ou humain contenant des dérivés de l'hémoglobine.

31. Utilisation du dispositif suivant l'une quelconque des revendications 1 à 24 ou procédé suivant l'une quelconque des revendications 25 à 27 pour réaliser un diagnostic médical ou vétérinaire.

**Claims**

1. Device for measuring the light absorption characteristics of a biological tissue sample, comprising:

   - means (7; 307) for illuminating the sample (1), which means are suitable for emitting alternately at least a first and a second light radiation towards the sample, said radiations being of a first and second wavelength which are different from one another;
   - means (9) for receiving and analysing the output light radiation emitted by the sample (1), said receiving and analysis means (9) comprising means (23) for converting said output radiation into a control signal ($S_0$);
   - control and command means (31; 331) which receive at the input the control signal ($S_0$) and generate at the output at least first ($S_1$) and second ($S_2$) command signals for the illuminating means (7; 307), corresponding to the first and second radiations, respectively, and at least one measurement signal ($S_m$); and
   - means (33) for calculating the absorption characteristics of the sample (1), which means are suitable for receiving at the input said measurement signal ($S_m$) and calculating said characteristics as a function of said measurement signal ($S_m$),

   **characterised in that** said control and command means (31; 331) are adapted so that the light intensity ($I_{UV}$, $I_R$) of each of the radiations varies periodically, with the same period, phase-shifted relative to one another, and for regulating at least one of the command signals ($S_1$, $S_2$) as a function of the control signal ($S_0$) so that, over an integration time interval ($T_1$) of at least one period ($T_p$) of variation of said radiations, the amplitude of said control signal ($S_0$), taken over the phases of emission of one of the radiations, is equal to the amplitude of the control signal ($S_0$), taken over the phases of emission of the other radiation,
   and **in that** the measurement signal ($S_m$) represents at least one of said command signals ($S_1$, $S_2$) over the integration time interval ($T_1$).

2. Measuring device according to claim 1, **characterised in that** the control and command means are suitable for delivering a first command signal ($S_1$), such that the amplitude of the light intensity ($I_{UV}$) of the first radiation is constant while the amplitude of the second signal ($S_2$) is regulated by said control and command means (31).

3. Measuring device according to claim 2, **characterised in that** said measurement signal ($S_m$) is composed of said second signal ($S_2$) over the integration time interval ($T_1$).

4. Measuring device according to any one of claims 1 to 3, **characterised in that** the illuminating means comprise first (11) and second (12) light sources which are suitable for emitting the first and second radiations, respectively, and which are supplied with power by first (15) and second (16) power supplies, respectively, said supplies (15, 16) being commanded by the first and second command signals, respectively.

5.  Measuring device according to claim 4, **characterised in that** at least one of the light sources (11, 12) is a light-emitting diode.

6.  Measuring device according to claim 4 or 5, **characterised in that** the first light source (11) emits the first radiation in a wavelength range corresponding to the ultraviolet range, especially from 300 to 390 nm, especially approximately 370 nm.

7.  Measuring device according to any one of claims 4 to 6, **characterised in that** the second light source (12) emits the second radiation in a wavelength range corresponding to the red light range, especially approximately 670 nm.

8.  Measuring device according to any one of claims 4 to 7, **characterised in that** the illuminating means (7; 307) comprise at least one optical filter (19) suitable for filtering the radiations of the light sources (11, 12) emitted towards the sample (1).

9.  Measuring device according to any one of claims 1 to 8, **characterised in that** the control and command means (31; 331) comprise synchronisation means (41) which are connected to the illuminating means (7) and generate at least one periodic synchronisation signal ($S_S$) towards said illuminating means (7), so that the light intensity ($I_{UV}$, $I_R$) of each of the radiations varies periodically, phase-shifted relative to one another.

10. Measuring device according to claim 9, **characterised in that** the synchronisation means (41) are suitable for varying the light intensity ($I_{UV}$, $I_R$) of the first and second radiations with a frequency greater than a minimum value substantially equal to 1 kHz.

11. Measuring device according to claim 9 or 10, **characterised in that** the control and command means (31; 331) comprise a control and command member (43) which is connected to the synchronisation means (41) so as to receive the synchronisation signal ($S_S$), and which receives the control signal ($S_0$) at the input.

12. Measuring device according to claim 11, **characterised in that** said control and command member comprises a high-pass filter (51) suitable for filtering the control signal ($S_0$) at the input.

13. Measuring device according to claim 11 or 12, **characterised in that** said control and command member (43) comprises a demultiplexing member (53) which receives at the input on the one hand a signal representing the control signal ($S_0$) and on the other hand the synchronisation signal ($S_S$), said demultiplexing member being suitable for supplying at the output a first elementary signal ($S_{e1}$) representing the level of intensity of the output radiation ($I_F$) during a phase of emission of the first radiation, and a second elementary signal ($S_{e2}$) representing the level of intensity of the output radiation during a phase of emission of the second radiation.

14. Measuring device according to claim 13, **characterised in that** the demultiplexing member (53) comprises at least two switch means (57, 58) which are commanded alternately for opening and closing by the synchronisation signal ($S_S$), and a storage means (60) associated with each of said switch means (57, 58).

15. Measuring device according to claims 12 and 13 taken together, **characterised in that** said signal representing the control signal ($S_0$) is the control signal filtered by said high-pass filter (51).

16. Measuring device according to any one of claims 13 to 15, **characterised in that** the control and command member (43) comprises a differential amplifier (55), the inverting input of which receives the first elementary signal ($S_{e1}$) and the noninverting input of which receives the second elementary signal ($S_{e2}$).

17. Measuring device according to claim 16, **characterised in that** the control and command member (43) comprises an integrating circuit (61) which is supplied at the input with the output signal of said differential amplifier (55) and is suitable for generating an integrated signal over at least one period of the synchronisation signal ($S_S$).

18. Measuring device according to claim 17, **characterised in that** said integrated signal constitutes the measurement signal ($S_m$).

19. Measuring device according to any one of claims 1 to 18, **characterised in that** the converter means (23) comprise a photodetector (25) which converts an optical signal into an electrical signal, and a preamplifier (27) for the electrical signal generated by said photodetector (25).

20. Measuring device according to any one of claims 1 to 19, **characterised in that** the receiving and analysis means (9) comprise an optical filter (21) interposed between the sample (1) and the converter means (23).

21. Measuring device according to any one of claims 1 to 20, **characterised in that** the calculation means (33) are connected at the output to at least one peripheral device (35), especially a display screen and/or a data storage device.

22. Measuring device according to any one of claims 1 to 21, **characterised in that** the illuminating means (307) are suitable for emitting in alternation three radiations of different wavelengths, the control and command means (331) being suitable for delivering three corresponding command signals ($S_1$, $S_2$, $S_3$), a first command signal ($S_1$) being such that the amplitude of the light intensity of the first radiation is constant while the amplitudes of the second ($S_2$) and third ($S_3$) signals are regulated by said control and command means (331).

23. Measuring device according to any one of claims 1 to 22, **characterised in that** it has a pincer-type structure (100) comprising two limbs (101, 102) which are articulated with one another so as to be able to grip a sample, the first limb (101) being provided with the illuminating means (7) and the second limb (102) being provided with the receiving and analysis means (9).

24. Measuring device according to any one of claims 1 to 22, **characterised in that** it comprises a bundle of optical fibres (201) through which there pass the radiation emitted by the illuminating means (7) and the radiation emitted by the sample (1), the latter radiation being reflected radiation.

25. Process for measuring the light absorption characteristics of a biological tissue sample, in which the following operations are carried out:

- the sample (1) is illuminated alternately by first and second radiations of different wavelengths and of intensities ($I_{UV}$, $I_R$) which are periodic and of the same period, by illuminating means (7; 307);
- the radiation emitted by the sample (1) is detected, and said radiation is analysed;
- said illuminating means (7; 307) are commanded as a function of said detected radiation;

**characterised in that** said command is carried out as follows:

- the intensity of the first and second radiations ($I_{UV}$, $I_R$) is regulated so that, over an integration time interval ($T_i$) of at least one period ($T_p$) of variation of said radiations, the intensity ($I_F$) of the output radiation, taken over the phases of emission of one of the first and second radiations, is equal to the intensity ($I_F$) of the output radiation taken over the phases of emission of the other of the first and second radiations; and
- the light absorption characteristics of the sample are calculated as a function of the reference intensity of one ($I_R$) of said first and second radiations, taken over a measurement time interval ($T_m$).

26. Process according to claim 25, **characterised in that** the amplitude of the intensity ($I_{UV}$) of one of said first and second radiations is kept constant while the amplitude of the intensity ($I_R$) of the other of said radiations is regulated.

27. Process according to claim 25 or 26, **characterised in that** the radiation emitted by the sample (1) is filtered before it is analysed.

28. Use of the device according to any one of claims 1 to 24 or process according to any one of claims 25 to 27 for measuring the light absorption characteristics of a plant leaf, in particular in order to measure the concentration of compounds of the phenol or phenylpropanoid family in a leaf epidermis.

29. Use of the device according to any one of claims 1 to 24 or process according to any one of claims 25 to 27 for estimating the nutritional needs, in particular the nitrogen needs, of a culture.

30. Use of the device according to any one of claims 1 to 24 or process according to any one of claims 25 to 27 for measuring the light absorption characteristics of an animal or human tissue containing haemoglobin derivatives.

31. Use of the device according to any one of claims 1 to 24 or process according to any one of claims 25 to 27 for carrying out a medical or veterinary diagnosis.

**Patentansprüche**

1. Vorrichtung zur Messung von Lichtabsorptionseigenschaften einer biologischen Gewebsprobe, umfassend:

   - Mittel (7; 307) zur Beleuchtung der Probe (1), angepasst, um alternativ mindestens eine erste und eine zweite Lichtstrahlungen gegen die Probe auszusenden, wobei die Strahlungen eine erste bzw. eine zweite Wellenlänge aufweisen, die untereinander verschieden sind;
   - Mittel (9) zur Aufnahme und Analyse der Ausgangslichtstrahlung, die aus der Probe (1) stammt, wobei die Aufnahme- und Analysemittel (9) Mittel zur Umwandlung (23) der Ausgangsstrahlung in ein Kontrollsignal ($S_0$) umfassen;
   - Kontroll- und Steuersignale (31; 331), die beim Eingang das Kontrollsignal ($S_0$) aufnehmen und beim Ausgang mindestens erste ($S_1$) und zweite ($S_2$) Steuersignale der Beleuchtungsmittel (7; 307) aussenden, entsprechend den ersten bzw. den zweiten Strahlungen, und mindestens ein Messsignal ($S_m$); und
   - Mittel zur Berechnung (33) der Absorptionseigenschaften der Probe (1), angepasst, um beim Eingang das Messsignal ($S_m$) aufzunehmen und die Eigenschaften je nach dem Messsignal ($S_m$) zu berechnen,

   **dadurch gekennzeichnet, dass** die Kontroll- und Steuermittel (31; 331) angepasst sind, damit die Lichtstärke ($I_{UV}$ und $I_R$) jeder der Strahlungen auf periodische Weise mit der gleichen Periode variiert, in Phasenverlagerung in Bezug aufeinander, und um mindestens eines der Steuersignale ($S_1$, $S_2$) je nach dem Kontrollsignal ($S_0$) zu regulieren, sodass auf einem Integrationszeitintervall ($T_1$) mindestens einer Periode ($T_p$) der Variation der Strahlungen die Amplitude des Kontrollsignals ($S_0$), entnommen auf den Sendephasen einer der Strahlungen, gleich der Amplitude des Kontrollsignals ($S_0$), entnommen auf den Sendephasen der anderen Strahlung, ist, und **dadurch**, dass das Messsignal ($S_m$) bezeichnend für mindestens eines der Steuersignale ($S_1$, $S_2$) auf dem Integrationszeitintervall ($T_1$) ist.

2. Messvorrichtung nach Anspruch 1, **dadurch gekennzeichnet, dass** die Kontroll- und Steuermittel angepasst sind, um ein erstes Steuersignal ($S_1$) auszugeben, so dass die Amplitude der Lichtstärke ($I_{UV}$) der ersten Strahlung konstant ist, während die Amplitude des zweiten Signals ($S_2$) von den Kontroll- und Steuermitteln (31) reguliert wird.

3. Messvorrichtung nach Anspruch 2, **dadurch gekennzeichnet, dass** das Messsignal ($S_m$) aus dem zweiten Signal ($S_2$) auf dem Integrationszeitintervall ($T_1$) gebildet ist.

4. Messvorrichtung nach einem der Ansprüche 1 bis 3, **dadurch gekennzeichnet, dass** die Beleuchtungsmittel erste (11) und zweite (12) Lichtquellen umfassen, die angepasst sind, um die erste bzw. die zweite Strahlung auszusenden, die elektrisch von ersten (15) bzw. zweiten (16) Stromversorgungen versorgt werden, wobei die Versorgungen (15, 16) vom ersten bzw. zweiten Steuersignal gesteuert werden.

5. Messvorrichtung nach Anspruch 4, **dadurch gekennzeichnet, dass** mindestens eine der Lichtquellen (11, 12) eine Leuchtdiode ist.

6. Messvorrichtung nach Anspruch 4 oder 5, **dadurch gekennzeichnet, dass** die erste Lichtquelle (11) die erste Strahlung in einem Wellenlängenbereich aussendet, der dem Ultraviolettbereich entspricht, insbesondere von 300 bis 390 nm, insbesondere ungefähr 370 nm.

7. Messvorrichtung nach einem der Ansprüche 4 bis 6, **dadurch gekennzeichnet, dass** die zweite Lichtquelle (12) die zweite Strahlung in einem Wellenlängenbereich aussendet, der dem Bereich des roten Lichts entspricht, insbesondere ungefähr 670 nm.

8. Messvorrichtung nach einem der Ansprüche 4 bis 7, **dadurch gekennzeichnet, dass** die Beleuchtungsmittel (7; 307) mindestens einen optischen Filter (19) umfassen, der angepasst ist, um die Strahlungen der Lichtquellen (11, 12), die gegen die Probe (1) ausgesendet werden, zu filtern.

9. Messvorrichtung nach einem der Ansprüche 1 bis 8, **dadurch gekennzeichnet, dass** die Kontroll- und Steuermittel (31; 331) Synchronisationsmittel (41) umfassen, die mit den Beleuchtungsmitteln (7) verbunden sind und mindestens ein periodisches Synchronisationssignal ($S_s$) gegen die Beleuchtungsmittel (7) aussenden, so dass die Lichtstärke

($I_{UV}$, $I_R$) jeder der Strahlungen auf periodische Weise variiert, in Phasenverschiebung in Bezug aufeinander.

**10.** Messvorrichtung nach Anspruch 9, **dadurch gekennzeichnet, dass** die Synchronisationsmittel (41) angepasst sind, um die Lichtstärke ($I_{UV}$, $I_R$) der ersten und zweiten Strahlungen mit einer Frequenz zu variieren, die höher als ein minimaler Wert ist, im Wesentlichen gleich 1 kHz.

**11.** Messvorrichtung nach Anspruch 9 oder 10, **dadurch gekennzeichnet, dass** die Kontroll- und Steuermittel (31; 331) ein Kontroll- und Steuerorgan (43) umfassen, das mit den Synchronisationsmitteln (41) verbunden ist, um das Synchronisationssignal ($S_s$) aufzunehmen, und beim Eingang das Kontrollsignal ($S_0$) aufnimmt.

**12.** Messvorrichtung nach Anspruch 11, **dadurch gekennzeichnet, dass** das Kontroll- und Steuerorgan einen Bandpass (51) umfasst, der angepasst ist, um das Kontrollsignal ($S_0$) beim Eingang zu filtern.

**13.** Messvorrichtung nach Anspruch 11 oder 12, **dadurch gekennzeichnet, dass** das Kontroll- und Steuerorgan (43) ein Demultiplexerorgan (53) umfasst, das beim Eingang einerseits ein Signal empfängt, das bezeichnend für das Kontrollsignal ($S_0$) ist, und andererseits das Synchronisationssignal ($S_s$), wobei das Demultiplexerorgan angepasst ist, um beim Ausgang ein erstes elementares Signals ($S_{e1}$) zu liefern, das bezeichnend für den Intensitätspegel der Ausgangsstrahlung ($I_F$) bei einer Sendephase der ersten Strahlung ist, und ein zweites elementares Signal ($S_{e2}$), das bezeichnend für den Intensitätspegel der Ausgangsstrahlung bei einer Sendephase der zweiten Strahlung ist.

**14.** Messvorrichtung nach Anspruch 13, **dadurch gekennzeichnet, dass** das Demultiplexerorgan (53) mindestens zwei Unterbrechungsmittel (57, 58) umfasst, die alternativ zur Öffnung und zur Schließung durch das Synchronisationssignal ($S_s$) gesteuert werden, und ein Speicherorgan (60) das mit jedem der Unterbrecherorgane (57, 58) verbunden ist.

**15.** Messvorrichtung nach Anspruch 12 und 13 zusammengenommen, **dadurch gekennzeichnet, dass** es sich beim Signal, das bezeichnend für das Kontrollsignal ($S_0$) ist, um das Kontrollsignal handelt, das vom Bandpass (51) gefiltert wird.

**16.** Messvorrichtung nach einem der Ansprüche 13 bis 15, **dadurch gekennzeichnet, dass** das Kontroll- und Steuerorgan (43) einen Differentialvertärker (55) umfasst, dessen Umkehreingang das erste elementare Signal ($S_{e1}$) erhält und dessen Nichtumkehreingang das zweite elementare Signal ($S_{e2}$) erhält.

**17.** Messvorrichtung nach Anspruch 16, **dadurch gekennzeichnet, dass** das Kontroll- und Steuerorgan (43) eine Integrierschaltung (61) umfasst, die beim Eingang vom Ausgangssignal des Differentialverstärkers (55) versorgt wird und angepasst ist, um ein integriertes Signal auf mindestens einer Periode des Synchronisationssignals ($S_s$) auszusenden.

**18.** Messvorrichtung nach Anspruch 17, **dadurch gekennzeichnet, dass** das integrierte Signal das Messsignal ($S_m$) bildet.

**19.** Messvorrichtung nach einem der Ansprüche 1 bis 18, **dadurch gekennzeichnet, dass** die Umwandlungsmittel (23) einen Fotodetektor (25) umfassen, der ein optisches Signal in ein elektrisches Signal umwandelt, und einen Vorverstärker (27) des elektrischen Signals, das aus dem Fotodetektor (25) stammt.

**20.** Messvorrichtung nach einem der Ansprüche 1 bis 19, **dadurch gekennzeichnet, dass** die Aufnahme- und Analysemittel (9) einen optischen Filter (21) umfassen, der zwischen der Probe (1) und den Umwandlungsmitteln (23) gelegt ist.

**21.** Messvorrichtung nach einem der Ansprüche 1 bis 20, **dadurch gekennzeichnet, dass** die Berechnungsmittel (33) beim Ausgang mit mindestens einem Peripheriegerät (35) verbunden sind, insbesondere einem Anzeigebildschirm und/oder einem Organ zur Speicherung der Daten.

**22.** Messvorrichtung nach einem der Ansprüche 1 bis 21, **dadurch gekennzeichnet, dass** die Beleuchtungsmittel (307) angepasst sind, um alternativ drei Strahlungen mit verschiedenen Wellenlängen auszusenden, wobei die Kontroll- und Steuermittel (331) angepasst sind, um drei entsprechende Steuersignale ($S_1$, $S_2$, $S_3$) zu liefern, wobei ein erstes Steuersignal ($S_1$), das der Art ist, dass die Amplitude der Lichtstärke der ersten Strahlung konstant ist, während die Amplituden des zweiten ($S_2$) bzw. dritten ($S_3$) Signals von den Kontroll- und Steuermitteln (331) reguliert werden.

**23.** Messvorrichtung nach einem der Ansprüche 1 bis 22, **dadurch gekennzeichnet, dass** sie eine Zangenstruktur (100) aufweist, die zwei Zweige (101, 102) umfasst, die aufeinander beweglich verbunden sind, um eine Probe umschließen zu können, wobei der erste Zweig (101) mit Beleuchtungsmitteln (7) ausgestattet ist, und der zweite Zweig (102) mit Aufnahme- und Analysemitteln (9) ausgestattet ist.

**24.** Messvorrichtung nach einem der Ansprüche 1 bis 22, **dadurch gekennzeichnet, dass** sie ein Bündel optischer Fasern (201) umfasst, durch das die Strahlung verläuft, die aus den Beleuchtungsmitteln (7) stammt, sowie die Strahlung, die aus der Probe (1) stammt, wobei diese letztere Strahlung eine zurückgeworfene Strahlung ist.

**25.** Verfahren zum Messen der Lichtabsorptionseigenschaften einer biologischen Gewebsprobe, in dem die folgenden Schritte durchgeführt werden:

- die Probe (1) wird alternativ durch die erste und die zweite Strahlung mit verschiedenen Wellenlängen und periodischen Stärken ($I_{uv}$, $I_R$) und der gleichen Periode durch Beleuchtungsmittel (7; 307) beleuchtet;
- die Strahlung aus der Probe (1) wird festgestellt, und die Strahlung wird analysiert;
- die Beleuchtungsmittel (7; 307) werden je nach der festgestellten Strahlung gesteuert;

**dadurch gekennzeichnet, dass** die Steuerung auf die folgende Weise durchgeführt wird:

- die Intensität der ersten und der zweiten Strahlung ($I_{uv}$, $I_R$) wird so reguliert, dass auf einem Integrationszeitintervall ($T_1$) mindestens einer Periode ($T_p$) der Variation der Strahlungen die Intensität ($I_F$) der Ausgangsstrahlung, entnommen auf den Sendephasen einer der ersten und zweiten Strahlungen, gleich der Intensität ($I_F$) der Ausgangsstrahlung, entnommen auf den Sendephasen des anderen der ersten und zweiten Strahlungen, ist; und
- die Lichtabsorptionseigenschaften der Probe werden je nach dem Vorgabewert der Intensität eines ($I_R$) der ersten und zweiten Strahlungen, entnommen auf einem Messzeitintervall ($T_m$), berechnet.

**26.** Verfahren nach Anspruch 25, **dadurch gekennzeichnet, dass** die Amplitude der Intensität ($I_{uv}$) einer der ersten und zweiten Strahlungen konstant gehalten wird, während die Amplitude der Intensität ($I_R$) der anderen der Strahlungen reguliert wird.

**27.** Verfahren nach Anspruch 25 oder 26, **dadurch gekennzeichnet, dass** die Strahlung, die aus der Probe (1) stammt, gefiltert wird, bevor sie analysiert wird.

**28.** Verwendung der Vorrichtung nach einem der Ansprüche 1 bis 24 oder Verfahren nach einem der Ansprüche 25 bis 27, um die Lichtabsorptionseigenschaften eines Pflanzenblattes zu messen, insbesondere, um die Messung der Konzentration einer Blattepidermis an Zusammensetzungen der Familie der Phenole und Phenylpropanoide durchzuführen.

**29.** Verwendung der Vorrichtung nach einem der Ansprüche 1 bis 24 oder Verfahren nach einem der Ansprüche 25 bis 27, um die Nahrungsbedürfnisse, insbesondere mit Stickstoff, einer Kultur einzuschätzen.

**30.** Verwendung der Vorrichtung nach einem der Ansprüche 1 bis 24 oder Verfahren nach einem der Ansprüche 25 bis 27, um die Lichtabsorptionseigenschaften eines tierischen oder menschlichen Gewebes, enthaltend Hämoglobinderivate, zu messen.

**31.** Verwendung der Vorrichtung nach einem der Ansprüche 1 bis 24 oder Verfahren nach einem der Ansprüche 25 bis 27, um eine medizinische oder tiermedizinische Diagnose zu erstellen.

FIG.1

FIG.2

EP 1 430 287 B1

*FIG.3*

18

EP 1 430 287 B1

$S_O$ 51 57 60 $S_{e1}$ 55 61 $S_C$ $S_C = S_m$

$S_{e2}$ 58 53 43 $S_C$

$S_S$

*FIG.4*

$I_{UV}$

*FIG.5A*

$t(ms)$

$T_P$

$I_R$

*FIG.5B*

$t(ms)$

$T_S$     $T_i$

$T_m$

$I_F$

*FIG.5C*

$t(ms)$

0     5     10     15     20

$S_2=Sc$

*FIG.5D*

$t(ms)$

0     5     10     15     20

EP 1 430 287 B1

**FIG.6**

_FIG.7_

EP 1 430 287 B1

*FIG.8*

EP 1 430 287 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 3518527 A1

**Littérature non-brevet citée dans la description**

- Internal filters : prospects for UV-acclimation in higher plants. *Physiol Plant.,* 1983, vol. 58, 445-450
- *la revue Oikos,* 1983, vol. 40, 357-368
- **J.P. Bryant.** Carbon/nutrient balance of boreal plants in relation to vertebrate herbivory'' ; dans la revue. *Journal of Chemical Ecology,* 1989, vol. 15, 1117-1131
- **P. Price.** Carbon-nutrient balance hypothesis in within-species phytochemical variation of Salix lasiolepis. *Quart. Rev. Biol.,* 1992, vol. 67, 283-335
- **R.A. Dixon ; N.L. Paiva.** Stress-induced phenylpropanoid metabolism. *Plant Cell,* 1995, vol. 7, 1085-1097
- Analysis of Phenolic Plant Metabolites. Methods in Ecology. Blackwell Scientific Publications, 1994, 238
- *Physiologia Plantarum,* 1997, vol. 101, 754-763